# EUROPEAN PATENT APPLICATION

(11) **EP 4 475 288 A1**
(43) Date of publication of application: **11.12.2024**
(21) Application number: 24173577.8
(22) Date of filing: 30.04.2024
(51) Int. Cl.: H01M 50/103, H01M 50/176, H01M 50/186, H01M 50/536, H01M 50/548, H01M 50/553, H01M 50/566

(54) **METHOD OF MANUFACTURING SECONDARY BATTERY**

(30) Priority: 08.06.2023 JP 2023094751
(71) Applicant: Prime Planet Energy & Solutions, Inc., Chuo-ku Tokyo 103-0022 (JP)
(72) Inventor: TADA, Naoya, Tokyo, 103-0022 (JP)
(74) Representative: Kuhnen & Wacker Patent- und Rechtsanwaltsbüro PartG mbB

(57) **Abstract**

A method of manufacturing a secondary battery includes: inserting an electrode assembly (200) into a case main body (110) from the second end portion side of the electrode assembly (200) through a first opening (111) after electrically connecting a first electrode terminal (131) and a first electrode tab (210B) to each other; electrically connecting a second electrode terminal (132) and a second electrode tab (220B) to each other after inserting the electrode assembly (200) into the case main body (110), a second electrode terminal (132) being provided on a second sealing plate (122); sealing the first opening (111) with a first sealing plate (121) after inserting the electrode assembly (200) into the case main body (110); and sealing a second opening (112) with the second sealing plate (122) after electrically connecting the second electrode terminal (132) and the second electrode tab (220B) to each other.

## Description

### CROSS REFERENCE TO RELATED APPLICATIONS

This nonprovisional application is based on Japanese Patent Application No. 2023-094751 filed on June 8, 2023 with the Japan Patent Office, the entire contents of which are hereby incorporated by reference.

### BACKGROUND OF THE INVENTION

### Field of the Invention

The present technology relates to a method of manufacturing a secondary battery.

### Description of the Background Art

Japanese Patent No. 4537353 discloses a prismatic secondary battery in which an electrode group (25) is accommodated in a case (14) provided with openings (14a, 14b) at both ends thereof and electrode terminals (21, 23) are respectively attached to cap plates (33, 33') that seal the openings (14a, 14b).

### SUMMARY OF THE INVENTION

Further improvement in energy density of a secondary battery has been required. From the viewpoint of the improvement in energy density, the battery described in Japanese Patent No. 4537353 has room for further improvement.

It is an object of the present technology to provide a method of manufacturing a secondary battery so as to obtain a secondary battery having a high energy density.

The present technology provides the following method of manufacturing a secondary battery.
[1] A method of manufacturing a secondary battery, the method comprising: preparing a case main body provided with a first opening and a second opening facing the first opening; producing an electrode assembly including a first electrode and a second electrode having a polarity different from a polarity of the first electrode, the electrode assembly having a first electrode tab located at a first end portion of the electrode assembly and connected to the first electrode, the electrode assembly having a second electrode tab located at a second end portion of the electrode assembly and connected to the second electrode, the second end portion being located opposite to the first end portion; electrically connecting a first electrode terminal and the first electrode tab to each other, the first electrode terminal being provided on a first sealing plate; inserting the electrode assembly into the case main body from the second end portion side of the electrode assembly through the first opening after electrically connecting the first electrode terminal and the first electrode tab to each other; electrically connecting a second electrode terminal and the second electrode tab to each other after inserting the electrode assembly into the case main body, the second electrode terminal being provided on a second sealing plate; sealing the first opening with the first sealing plate after inserting the electrode assembly into the case main body; and sealing the second opening with the second sealing plate after electrically connecting the second electrode terminal and the second electrode tab to each other.
[2] The method of manufacturing the secondary battery according to [1], further comprising disposing a spacer between the first sealing plate and the electrode assembly, wherein the electrode assembly is inserted into the case main body by pressing the electrode assembly using the first sealing plate with the spacer being interposed between the electrode assembly and the first sealing plate.
[3] The method of manufacturing the secondary battery according to [2], wherein in the inserting of the electrode assembly into the case main body, the spacer is brought into abutment with a position located at the first end portion of the electrode assembly and separated from the first electrode tab.
[4] The method of manufacturing the secondary battery according to [2] or [3], wherein the disposing of the spacer includes fixing the spacer to the first sealing plate.
[5] The method of manufacturing the secondary battery according to [2] or [3], wherein the disposing of the spacer includes fixing the spacer to the electrode assembly.
[6] The method of manufacturing the secondary battery according to any one of [1] to [5], further comprising covering, with an electrode assembly holder having an insulating property, the electrode assembly before being inserted into the case main body.
[7] The method of manufacturing the secondary battery according to [1], further comprising disposing a spacer between the first sealing plate and the electrode assembly, wherein after inserting a portion of the electrode assembly into the case main body with the electrode assembly being held, the electrode assembly is inserted into the case main body by pressing the electrode assembly using the first sealing plate with the spacer being interposed between the electrode assembly and the first sealing plate until the first sealing plate is brought into abutment with the case main body.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view of a secondary battery.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a front cross sectional view of the secondary battery shown in Fig. 1.
Fig. 6 is a front view showing a negative electrode raw plate before a negative electrode plate is formed.
Fig. 7 is a cross sectional view of the negative electrode raw plate shown in Fig. 6 along VII-VII.
Fig. 8 is a front view showing the negative electrode plate formed from the negative electrode raw plate.
Fig. 9 is a front view showing a positive electrode raw plate before a positive electrode plate is formed.
Fig. 10 is a cross sectional view of the positive electrode raw plate shown in Fig. 9 along X-X.
Fig. 11 is a front view showing the positive electrode plate formed from the positive electrode raw plate.
Fig. 12 is a diagram showing an electrode assembly and a current collector each removed from the secondary battery.
Fig. 13 is a diagram showing a connection structure between the negative electrode tab group and the negative electrode current collector.
Fig. 14 is a front view of the connection structure shown in Fig. 13.
Fig. 15 is a cross sectional view of the connection structure shown in Fig. 13.
Fig. 16 is a diagram showing a step of inserting the electrode assembly into a case main body.
Fig. 17 is a diagram showing a step of disposing a spacer between a sealing plate and the electrode assembly.
Fig. 18 is a cross sectional view showing a state in which the spacer is disposed between the sealing plate and the electrode assembly.
Fig. 19 is a diagram showing a modification of the spacer.
Fig. 20 is a diagram showing an exemplary mechanism that presses the electrode assembly with the sealing plate and the spacer being interposed therebetween.
Fig. 21 is a diagram showing a state in which the mechanism shown in Fig. 20 is viewed in the Z axis direction.
Fig. 22 is a first diagram showing a modification of the spacer.
Fig. 23 is a second diagram showing a modification of the spacer.
Fig. 24 is a third diagram showing a modification of the spacer.
Fig. 25 is a fourth diagram showing a modification of the spacer.
Fig. 26 is a fifth diagram showing a modification of the spacer.
Fig. 27 is a sixth diagram showing a modification of the spacer.
Fig. 28 is a flowchart showing each step of a method of manufacturing the secondary battery.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the term "electrode" may collectively represents a positive electrode and a negative electrode. Further, the term "electrode plate" may collectively represent a positive electrode plate and a negative electrode plate.

### (Overall Configuration of Battery)

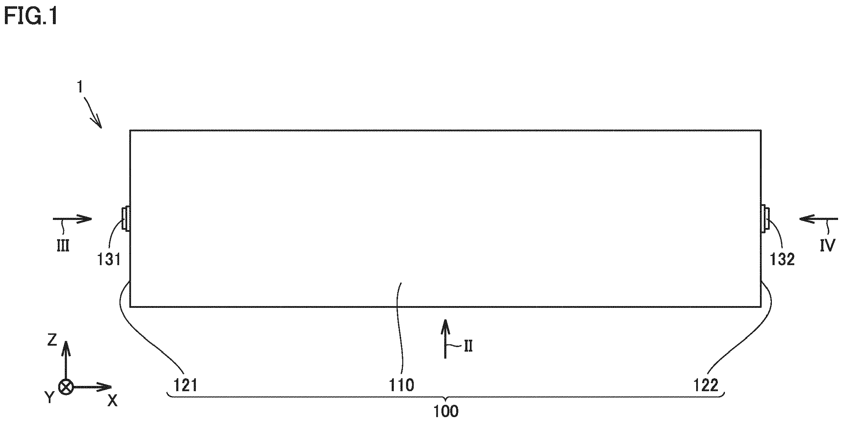

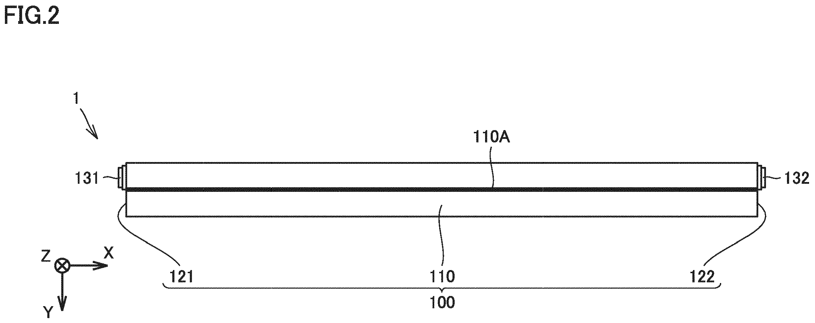

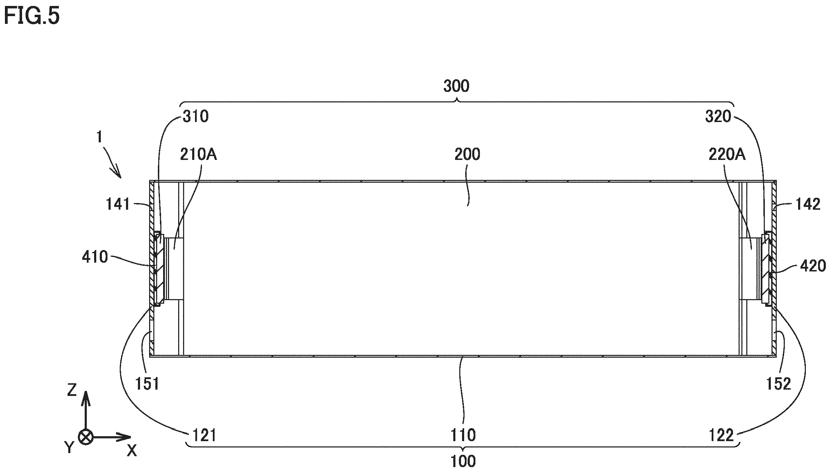

Fig. 1 is a front view of a secondary battery 1 according to the present embodiment. Figs. 2 to 4 are diagrams showing states of secondary battery 1 shown in Fig. 1 when viewed in directions of arrows II, III, and IV, respectively. Fig. 5 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 5, secondary battery 1 includes an exterior package 100, an electrode assembly 200, and current collectors 300. Exterior package 100 includes a case main body 110, a sealing plate 121 (first sealing plate), and a sealing plate 122 (second sealing plate).

In the specification of the present application, an X axis direction (first direction) shown in Figs. 1 to 5 may be referred to as a "width direction" of secondary battery 1 or case main body 110, a Y axis direction (second direction) may be referred to as a "thickness direction" of secondary battery 1 or case main body 110, and a Z direction (third direction) may be referred to as a "height direction" of secondary battery 1 or case main body 110.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y axis direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plates 121, 122 are provided at respective end portions of the case main body. Case main body 110 can be formed to have a prismatic tubular shape in, for example, the following manner: end sides of a plate-shaped member having been bent are brought into abutment with each other (joining portion 110A illustrated in Fig. 2) and are joined together (for example, laser welding). Each of the corners of the "prismatic tubular shape" may have a shape with a curvature.

In the present embodiment, case main body 110 is formed to be longer in the width direction (X axis direction) of secondary battery 1 than in each of the thickness direction (Y axis direction) and the height direction (Z axis direction) of secondary battery 1. The size (width) of case main body 110 in the X axis direction is preferably about 30 cm or more. In this way, secondary battery 1 can be formed to have a relatively large size (high capacity). The size (height) of case main body 110 in the Z axis direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

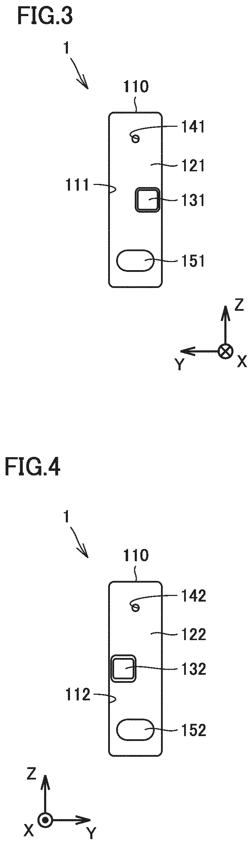

As shown in Fig. 3, an opening 111 (first opening) is provided at one end portion of case main body 110. Opening 111 is sealed with sealing plate 121. Sealing plate 121 is provided with a negative electrode terminal 131 (first electrode terminal), an injection hole 141, and a gas-discharge valve 151. The positions of negative electrode terminal 131, injection hole 141, and gas-discharge valve 151 can be appropriately changed. Each of opening 111 and sealing plate 121 has a substantially rectangular shape in which the Y axis direction corresponds to its short-side direction and the Z axis direction corresponds to its long-side direction.

As shown in Fig. 4, an opening 112 (second opening) is provided at the other end portion of case main body 110. Opening 112 is sealed with sealing plate 122. Sealing plate 122 is provided with a positive electrode terminal 132 (second electrode terminal), an injection hole 142, and a gas-discharge valve 152. The positions of positive electrode terminal 132, injection hole 142, and gas-discharge valve 152 can be appropriately changed. Each of opening 112 and sealing plate 122 has a substantially rectangular shape in which the Y axis direction corresponds to its short-side direction and the Z axis direction corresponds to its long-side direction.

Each of sealing plates 121, 122 is composed of a metal. Specifically, each of sealing plates 121, 122 is composed of aluminum, an aluminum alloy, iron, an iron alloy, or the like.

Negative electrode terminal 131 is electrically connected to a negative electrode of electrode assembly 200. Positive electrode terminal 132 is electrically connected to a positive electrode of electrode assembly 200.

Negative electrode terminal 131 is composed of a conductive material (more specifically, a metal), and can be composed of copper, a copper alloy, or the like, for example. A portion or layer composed of aluminum or an aluminum alloy may be provided at a portion of an outer surface of negative electrode terminal 131.

Positive electrode terminal 132 is composed of a conductive material (more specifically, a metal), and can be composed of aluminum, an aluminum alloy, or the like, for example.

Each of injection holes 141, 142 is sealed with a sealing member (not shown). As the sealing member, for example, a blind rivet or another metal member can be used.

Each of gas-discharge valves 151, 152 is fractured to discharge a gas in exterior package 100 to outside when pressure in exterior package 100 becomes equal to or more than a predetermined value.

Electrode assembly 200 is an electrode assembly having a flat shape and having a below-described positive electrode plate and a below-described negative electrode plate. Specifically, electrode assembly 200 is a wound type electrode assembly in which a strip-shaped positive electrode plate and a strip-shaped negative electrode plate are both wound with a strip-shaped separator (not shown) being interposed therebetween. It should be noted that in the present specification, the "electrode assembly" is not limited to the wound type electrode assembly, and may be a stacked type electrode assembly in which a plurality of positive electrode plates and a plurality of negative electrode plates are alternately stacked. The electrode assembly may include a plurality of positive electrode plates and a plurality of negative electrode plates, respective positive electrode tabs provided in the positive electrode plates may be stacked to form a positive electrode tab group, and respective negative electrode tabs provided in the negative electrode plates may be stacked to form a negative electrode tab group.

As shown in Fig. 5, exterior package 100 accommodates electrode assembly 200. Electrode assembly 200 is accommodated in exterior package 100 such that the winding axis thereof is parallel to the X axis direction.

Specifically, one or a plurality of the wound type electrode assemblies and an electrolyte solution (electrolyte) (not shown) are accommodated inside a below-described insulating sheet 600 disposed in exterior package 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and diethyl carbonate (DEC) at a volume ratio (25°C) of 30:30:40. It should be noted that instead of the electrolyte solution, a solid electrolyte may be used.

Electrode assembly 200 includes: a negative electrode tab group 210A (first electrode tab group) provided at an end portion (first end portion) thereof on the sealing plate 121 side; and a positive electrode tab group 220A (second electrode tab group) provided at an end portion (second end portion) thereof on the sealing plate 122 side. Negative electrode tab group 210A and positive electrode tab group 220A are connected to the negative electrode and positive electrode of electrode assembly 200, respectively. Negative electrode tab group 210A and positive electrode tab group 220A are formed to protrude toward sealing plates 121, 122 respectively from a main body portion (a portion in which the positive electrode plate and the negative electrode plate are stacked with a separator being interposed therebetween) of electrode assembly 200.

Current collectors 300 include negative electrode current collector 310 (first current collector) and a positive electrode current collector 320 (second current collector). Each of negative electrode current collector 310 and positive electrode current collector 320 is constituted of a plate-shaped member. Electrode assembly 200 is electrically connected to negative electrode terminal 131 and positive electrode terminal 132 through current collectors 300.

Negative electrode current collector 310 is disposed on sealing plate 121 with an insulating member 410 composed of a resin being interposed therebetween. Negative electrode current collector 310 is electrically connected to negative electrode tab group 210A and negative electrode terminal 131. Negative electrode current collector 310 is composed of a conductive material (more specifically, a metal), and can be composed of copper, a copper alloy, or the like, for example.

Positive electrode current collector 320 is disposed on sealing plate 122 with an insulating member 420 composed of a resin being interposed therebetween. Positive electrode current collector 320 is electrically connected to positive electrode tab group 220A and positive electrode terminal 132. Positive electrode current collector 320 is composed of a conductive material (more specifically, a metal), and can be composed of aluminum, an aluminum alloy, or the like, for example. It should be noted that positive electrode tab group 220A may be electrically connected to sealing plate 122 directly or via positive electrode current collector 320. In this case, sealing plate 122 may serve as positive electrode terminal 132.

### (Configuration of Electrode Assembly 200)

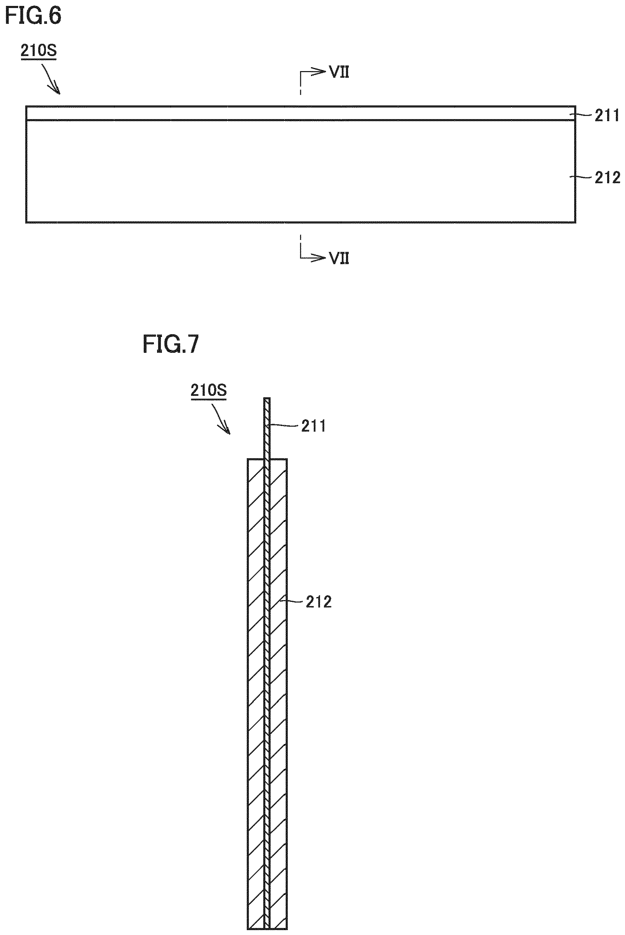

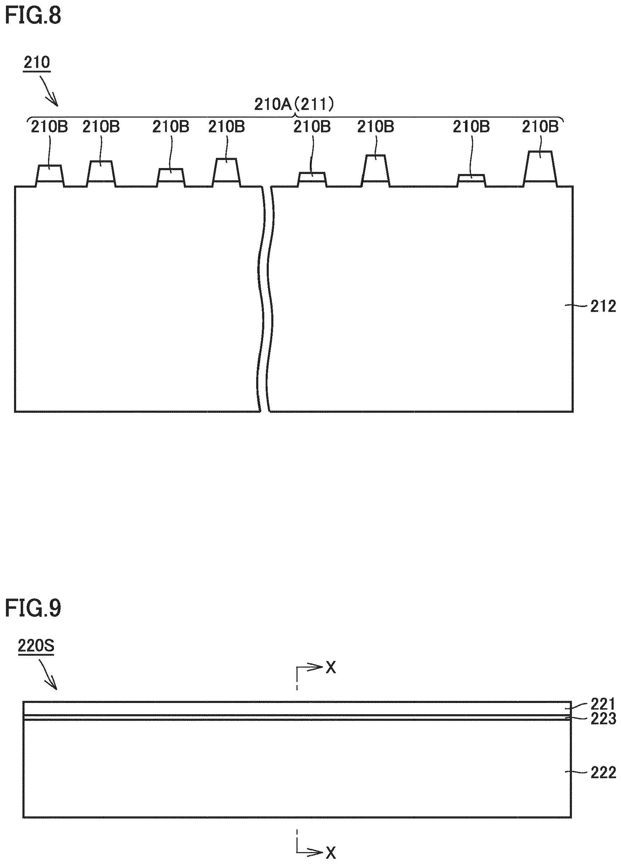

Fig. 6 is a front view showing a negative electrode raw plate 210S before negative electrode plate 210 (first electrode) is formed, Fig. 7 is a cross sectional view of negative electrode raw plate 2105 shown in Fig. 6 along VII-VII, and Fig. 8 is a front view showing negative electrode plate 210 formed from negative electrode raw plate 210S.

Negative electrode plate 210 is manufactured by processing negative electrode raw plate 210S. As shown in Figs. 6 and 7, negative electrode raw plate 210S includes a negative electrode core body 211 and a negative electrode active material layer 212. Negative electrode core body 211 is a copper foil or a copper alloy foil.

Negative electrode active material layer 212 is formed on negative electrode core body 211 except for each of end portions of both surfaces of negative electrode core body 211 on one side. Negative electrode active material layer 212 is formed by applying a negative electrode active material layer slurry using a die coater.

The negative electrode active material layer slurry is produced by kneading graphite serving as a negative electrode active material, styrene-butadiene rubber (SBR) and carboxymethyl cellulose (CMC) each serving as a binder, and water serving as a dispersion medium such that the mass ratio of the graphite, the SBR, and the CMC is about 98:1:1.

Negative electrode core body 211 having the negative electrode active material layer slurry applied thereon is dried to remove the water included in the negative electrode active material layer slurry, thereby forming negative electrode active material layer 212. Further, by compressing negative electrode active material layer 212, negative electrode raw plate 210S including negative electrode core body 211 and negative electrode active material layer 212 is formed. Negative electrode raw plate 210S is cut into a predetermined shape, thereby forming negative electrode plate 210. Negative electrode raw plate 2105 can be cut by laser processing with application of an energy ray, die processing, cutter processing, or the like.

As shown in Fig. 8, a plurality of negative electrode tabs 210B each constituted of negative electrode core body 211 are provided at one end portion, in the width direction, of negative electrode plate 210 formed from negative electrode raw plate 210S. When negative electrode plate 210 is wound, the plurality of negative electrode tabs 210B are stacked to form negative electrode tab group 210A. The position of each of the plurality of negative electrode tabs 210B and the length thereof in the protruding direction are appropriately adjusted in consideration of the state in which negative electrode tab group 210A is connected to negative electrode current collector 310. It should be noted that the shape of negative electrode tab 210B is not limited to the one illustrated in Fig. 8.

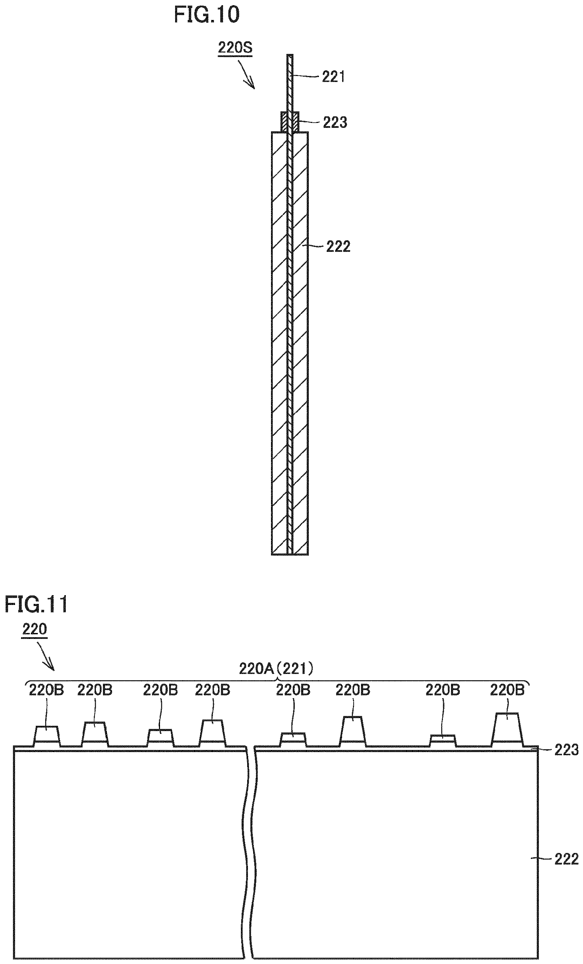

Fig. 9 is a front view showing a positive electrode raw plate 220S before positive electrode plate 220 (second electrode) is formed, Fig. 10 is a cross sectional view of positive electrode raw plate 2205 shown in Fig. 9 along X-X, and Fig. 11 is a front view showing positive electrode plate 220 formed from positive electrode raw plate 220S.

Positive electrode plate 220 is manufactured by processing positive electrode raw plate 220S. As shown in Figs. 9 and 10, positive electrode raw plate 220S includes a positive electrode core body 221, a positive electrode active material layer 222, and a positive electrode protective layer 223. Positive electrode core body 221 is an aluminum foil or an aluminum alloy foil.

Positive electrode active material layer 222 is formed on positive electrode core body 221 except for each of end portions of both surfaces of positive electrode core body 221 on one side. Positive electrode active material layer 222 is formed on positive electrode core body 221 by applying a positive electrode active material layer slurry using a die coater.

The positive electrode active material layer slurry is produced by kneading a lithium-nickel-cobalt-manganese composite oxide serving as a positive electrode active material, polyvinylidene difluoride (PVdF) serving as a binder, a carbon material serving as a conductive material, and N-methyl-2-pyrrolidone (NMP) serving as a dispersion medium such that the mass ratio of the lithium-nickel-cobalt-manganese composite oxide, the PVdF, and the carbon material is about 97.5:1:1.5.

Positive electrode protective layer 223 is formed in contact with positive electrode core body 221 at an end portion of positive electrode active material layer 222 on the one side in the width direction. Positive electrode protective layer 223 is formed on positive electrode core body 221 by applying a positive electrode protective layer slurry using a die coater. Positive electrode protective layer 223 has an electrical resistance larger than that of positive electrode active material layer 222.

The positive electrode protective layer slurry is produced by kneading alumina powder, a carbon material serving as a conductive material, PVdF serving as a binder, and NMP serving as a dispersion medium such that the mass ratio of the alumina powder, the carbon material, and the PVdF is about 83:3:14.

Positive electrode core body 221 having the positive electrode active material layer slurry and the positive electrode protective layer slurry applied thereon is dried to remove the NMP included in the positive electrode active material layer slurry and the positive electrode protective layer slurry, thereby forming positive electrode active material layer 222 and positive electrode protective layer 223. Further, by compressing positive electrode active material layer 222, positive electrode raw plate 2205 including positive electrode core body 221, positive electrode active material layer 222, and positive electrode protective layer 223 is formed. Positive electrode raw plate 220S is cut into a predetermined shape, thereby forming positive electrode plate 220. Positive electrode raw plate 220S can be cut by laser processing with application of an energy ray, die processing, cutter processing, or the like.

As shown in Fig. 11, a plurality of positive electrode tabs 220B each constituted of positive electrode core body 221 are provided at one end portion, in the width direction, of positive electrode plate 220 formed from positive electrode raw plate 220S. When positive electrode plate 220 is wound, the plurality of positive electrode tabs 220B are stacked to form positive electrode tab group 220A. The position of each of the plurality of positive electrode tabs 220B and the length thereof in the protruding direction are appropriately adjusted in consideration of the state in which positive electrode tab group 220A is connected to positive electrode current collector 320. It should be noted that the shape of positive electrode tab 220B is not limited to the one illustrated in Fig. 11.

Positive electrode protective layer 223 is provided at the root of each of the plurality of positive electrode tabs 220B. Positive electrode protective layer 223 may not necessarily be provided at the root of positive electrode tab 220B.

In a typical example, the thickness of (one) negative electrode tab 210B is smaller than the thickness of (one) positive electrode tab 220B. In this case, the thickness of negative electrode tab group 210A is smaller than the thickness of positive electrode tab group 220A.

### (Connection Structure between Electrode Assembly 200 and Current Collector 300)

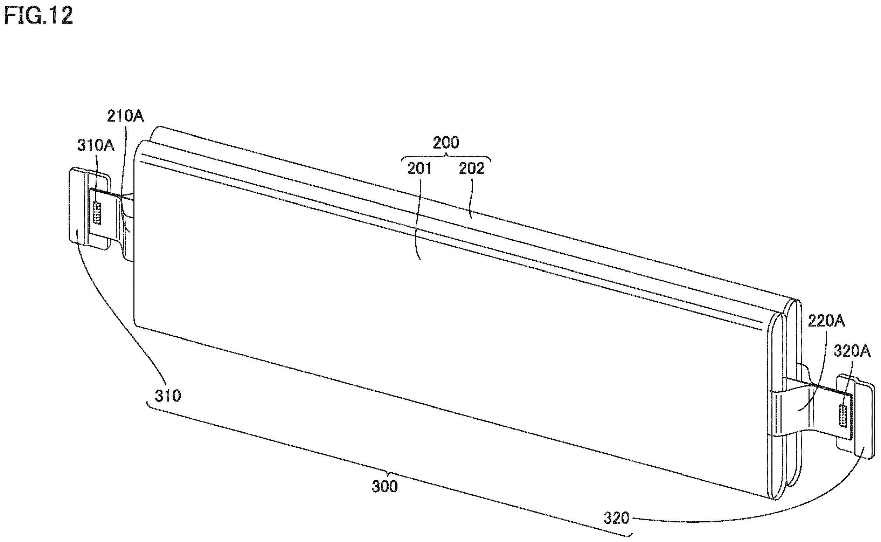

Fig. 12 is a diagram showing electrode assembly 200 and current collector 300 each removed from secondary battery 1. As shown in Fig. 12, electrode assembly 200 is formed by stacking two electrode assemblies 201, 202, each of which is a wound type electrode assembly. Although Fig. 12 illustratively shows the structure in which two wound type electrode assemblies are stacked, electrode assembly 200 may be constituted of one wound type electrode assembly, may be constituted of three or more wound type electrode assemblies, or may be constituted of a stacked type electrode assembly.

Negative electrode tab group 210A is joined to negative electrode current collector 310 at a joining portion 310A and positive electrode tab group 220A is joined to positive electrode current collector 320 at a joining portion 320A. Each of joining portions 310A, 320A can be formed by, for example, ultrasonic bonding, resistance welding, laser welding, swaging, or the like. Joining portions 310A, 320A form a conductive path between negative electrode tab group 210A and negative electrode terminal 131 and a conductive path between positive electrode tab group 220A and positive electrode terminal 132.

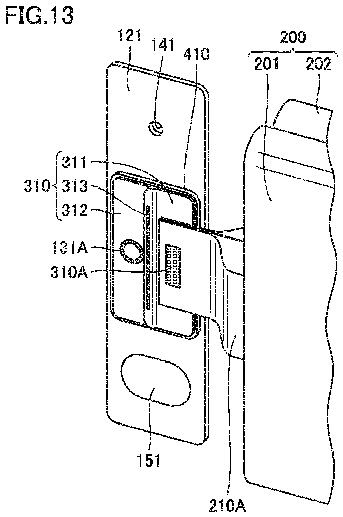

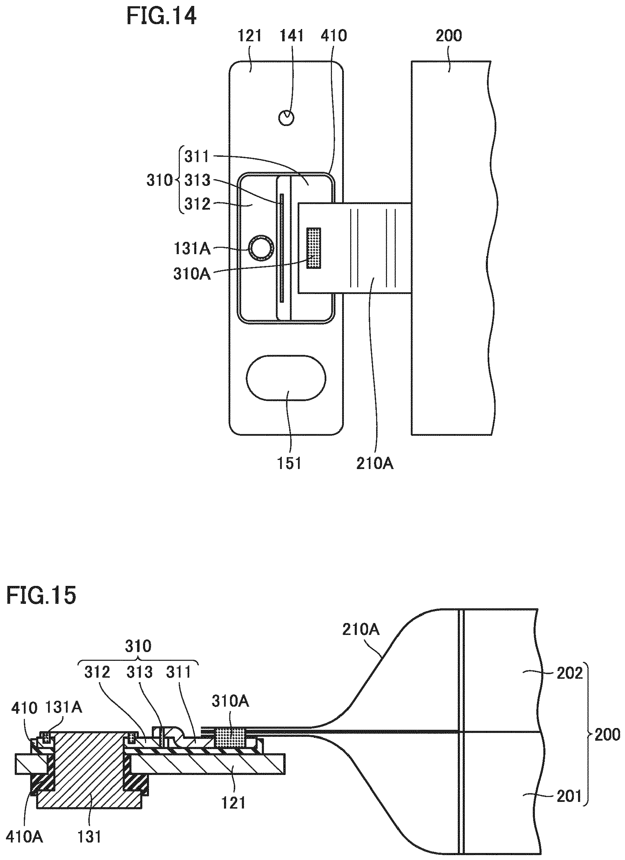

Fig. 13 is a diagram showing a connection structure between negative electrode tab group 210A and negative electrode current collector 310. Figs. 14 and 15 are respectively a front view and a cross sectional view of the connection structure shown in Fig. 13.

As shown in Figs. 13 to 15, negative electrode current collector 310 is connected to negative electrode terminal 131 between electrode assembly 200 and sealing plate 121. Negative electrode current collector 310 includes a first conductive member 311 and a second conductive member 312. First conductive member 311 and second conductive member 312 are joined to each other at a joining portion 313.

Negative electrode tab group 210A is joined to first conductive member 311 of negative electrode current collector 310 at joining portion 310A. First conductive member 311 is connected to second conductive member 312 at joining portion 313. Joining portion 313 can be formed by, for example, ultrasonic bonding, resistance welding, laser welding, swaging, or the like.

Each of first conductive member 311 and second conductive member 312 is attached to the inner surface side of sealing plate 121 with insulating member 410 composed of a resin being interposed therebetween.

Negative electrode terminal 131 is attached to sealing plate 121 with an insulating member 410A composed of a resin being interposed therebetween. Negative electrode terminal 131 is provided to be exposed to the outside of sealing plate 121 and reach second conductive member 312 of negative electrode current collector 310 provided on the inner surface side of sealing plate 121. Negative electrode terminal 131 and second conductive member 312 can be connected by ultrasonic bonding, resistance welding, laser welding, swaging, or the like, for example. In the present embodiment, negative electrode terminal 131 and second conductive member 312 are connected in the following manner: a through hole is provided in second conductive member 312, negative electrode terminal 131 is inserted into the through hole, negative electrode terminal 131 is swaged on second conductive member 312, and then the swaged portion and second conductive member 312 are welded at a joining portion 131A.

As a procedure for assembling each component, first, negative electrode terminal 131 and second conductive member 312 as well as insulating members 410, 410A are attached to sealing plate 121. Next, first conductive member 311 connected to electrode assembly 200 is attached to second conductive member 312. On this occasion, first conductive member 311 is disposed on insulating member 410 such that a portion of first conductive member 311 overlaps with second conductive member 312. Next, first conductive member 311 and second conductive member 312 are welded and connected to each other at joining portion 313. It should be noted that insulating members 410, 410A may be constituted of one member.

It should be noted that negative electrode terminal 131 may be electrically connected to sealing plate 121. Further, sealing plate 121 may serve as negative electrode terminal 131.

It should be noted that each of Figs. 13 to 15 illustrates negative electrode current collector 310 constituted of two components (first conductive member 311 and second conductive member 312); however, negative electrode current collector 310 may be constituted of one component.

Each of Figs. 13 to 15 shows the connection structure on the negative electrode side; however, the basic connection structure on the positive electrode side is the same as that on the negative electrode side.

### (Step of Inserting Electrode Assembly 200)

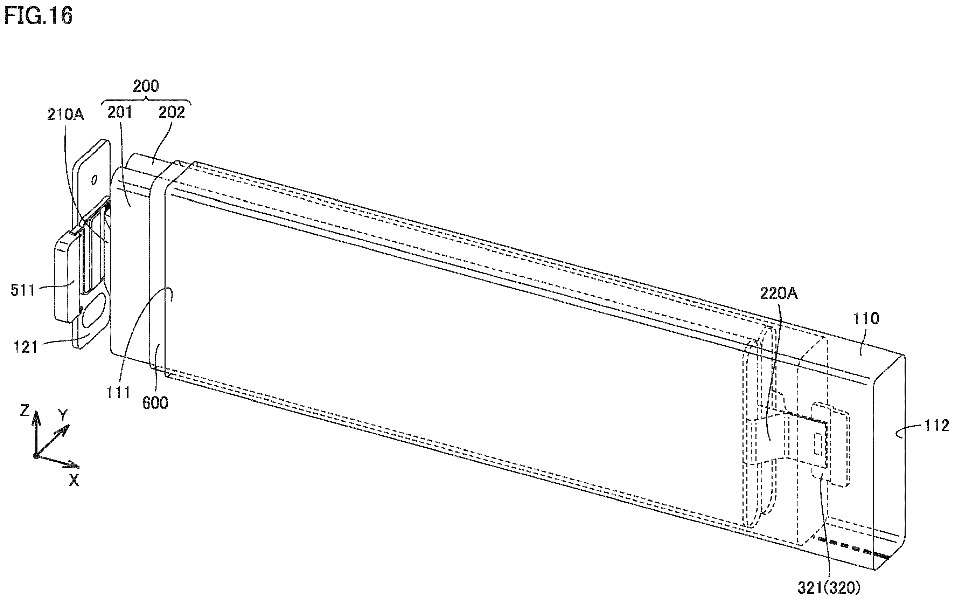

Fig. 16 is a diagram showing a step of inserting electrode assembly 200 into case main body 110. As shown in Fig. 16, insulating sheet 600 (electrode assembly holder) composed of a resin is disposed between electrode assembly 200 and case main body 110.

Insulating sheet 600 may be composed of, for example, a resin. More specifically, the material of insulating sheet 600 is, for example, polypropylene (PP), polyethylene terephthalate (PET), polyphenylene sulfide (PPS), polyimide (PI), or polyolefin (PO).

Insulating sheet 600 does not necessarily need to cover a whole of the surfaces of electrode assembly 200. Insulating sheet 600 preferably covers an area of about 50% or more, more preferably about 70% or more, of the outer surfaces of the electrode assembly. Insulating sheet 600 preferably covers a whole of at least four surfaces of the six surfaces of electrode assembly 200 having a substantially rectangular parallelepiped shape (flat shape) other than the two surfaces thereof on which negative electrode tab group 210A and positive electrode tab group 220A are formed respectively.

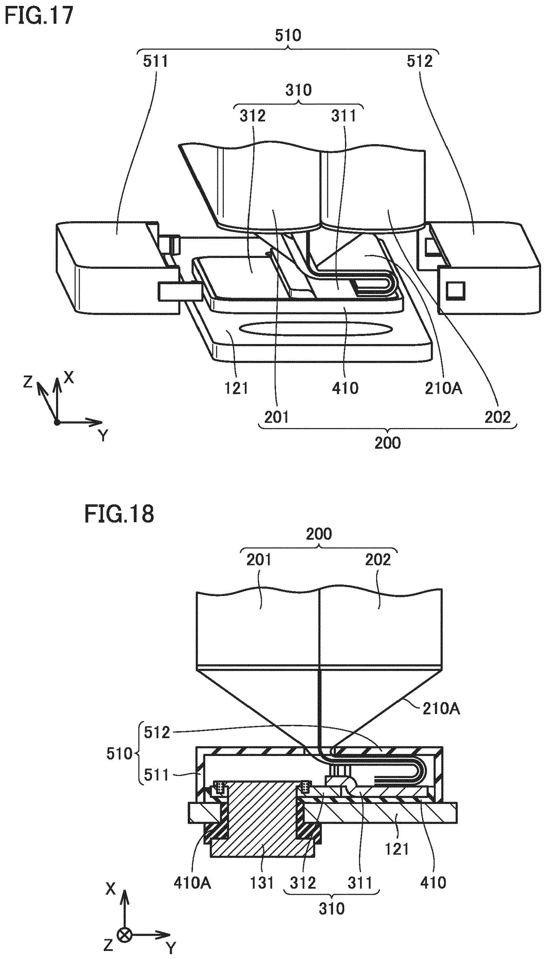

Fig. 17 is a diagram showing a step of disposing a spacer 510 between sealing plate 121 and electrode assembly 200. Fig. 18 is a cross sectional view showing a state in which spacer 510 is disposed between sealing plate 121 and electrode assembly 200.

As shown in Figs. 17 and 18, negative electrode tab group 210A extends from electrode assembly 200 toward sealing plate 121 in the following manner: negative electrode tab group 210A extends from the central portion of sealing plate 121 to an end portion of sealing plate 121 in the Y axis direction and is then bent to be folded back toward the central portion in an opposite direction. Spacer 510 is disposed to store the bent negative electrode tab group 210A (bent portion).

Spacer 510 includes a first spacer 511 and a second spacer 512. First spacer 511 and second spacer 512 are slid along the Y axis direction from the respective end portion sides to the center side of sealing plate 121, and are accordingly engaged with each other. Thus, spacer 510 is fixed to sealing plate 121 with insulating member 410 being interposed therebetween, thereby increasing stability of the position of spacer 510.

As shown in Fig. 18, spacer 510 forms an inner space for accommodating negative electrode current collector 310, and the tip portion of negative electrode tab group 210A is also accommodated in the inner space of spacer 510. Spacer 510 is provided with a hole portion through which negative electrode tab group 210A passes.

The material of spacer 510 is not particularly limited, but an insulating material such as a resin is preferably used. More specifically, it is preferable to use a sheet composed of polyolefin (PO). Further, insulating sheet 600 may be interposed between spacer 510 and electrode assembly 200.

Referring again to Fig. 16, in a method of manufacturing secondary battery 1 according to the present embodiment, after negative electrode terminal 131 and negative electrode tab group 210A are electrically connected to each other, electrode assembly 200 is inserted into case main body 110 through opening 111 from its end portion side on the positive electrode tab group 220A side. When electrode assembly 200 is inserted to a predetermined position of case main body 110, positive electrode tab group 220A protrudes to the outside of case main body 110 with respect to opening 112 of case main body 110. Thus, after electrode assembly 200 is inserted into case main body 110, positive electrode terminal 132 and positive electrode tab group 220A can be connected to each other.

When negative electrode terminal 131 attached to sealing plate 121 is electrically connected to negative electrode tab group 210A after electrode assembly 200 is inserted into case main body 110, negative electrode tab group 210A is required to have such a length that negative electrode tab group 210A of electrode assembly 200 accommodated in case main body 110 sufficiently protrudes to the outside of case main body 110. By electrically connecting negative electrode terminal 131, which is attached to sealing plate 121, and negative electrode tab group 210A before inserting electrode assembly 200 into case main body 110, the length of negative electrode tab group 210A can be reduced as compared with a case where they are connected after electrode assembly 200 is inserted into case main body 110. As a result, a volume occupation ratio of negative electrode plate 210 and positive electrode plate 220 in the inner space of case main body 110 can be increased.

In the example of Fig. 16, electrode assembly 200 is inserted into case main body 110 after spacer 510 that accommodates the bent portion of negative electrode tab group 210A is disposed. In this way, the bent portion of negative electrode tab group 210A can be protected in the step of inserting electrode assembly 200.

In the example of Fig. 16, electrode assembly 200 is inserted in case main body 110 with electrode assembly 200 being covered with insulating sheet 600. Thus, electrode assembly 200 can be suppressed from being damaged at the time of insertion into case main body 110.

Case main body 110 can be held at a predetermined angle during the step of inserting electrode assembly 200. As an example, electrode assembly 200 is preferably inserted with case main body 110 being held such that the X axis direction (width direction of case main body 110) intersects the horizontal direction at an angle of about ±45° or less. For example, electrode assembly 200 can be inserted into case main body 110 with case main body 110 being inclined such that the upper end portion of opening 111 into which electrode assembly 200 is to be inserted is located above the upper end portion of opening 112 in the vertical direction.

The step of inserting electrode assembly 200 is not limited to pushing electrode assembly 200 from the opening 111 side, and may be performed by, for example, pulling electrode assembly 200 from the opening 112 side.

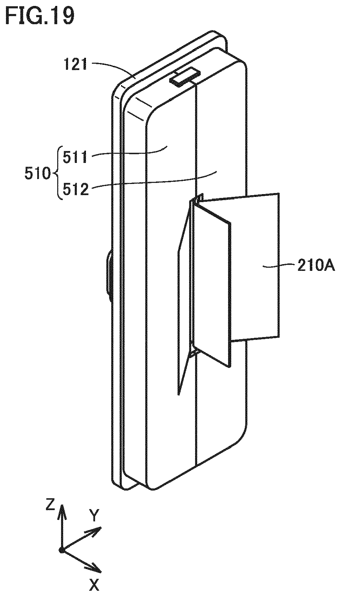

Fig. 19 is a diagram showing a modification of spacer 510. In the example of Figs. 16 to 18, spacer 510 is disposed at a portion of sealing plate 121 in the height direction (Z axis direction); however, spacer 510 may be disposed at substantially a whole of sealing plate 121 in the height direction as shown in Fig. 19. On this occasion, spacer 510 may have a portion that is located at a position (first region) separated from negative electrode tab group 210A in the Z axis direction and that protrudes to the electrode assembly 200 side with respect to a vicinity (second region) of negative electrode tab group 210A. A step (preferably, a step of about 1 mm or more) may be formed at a boundary between the first region and the second region. Thus, negative electrode tab group 210A can be suppressed from being damaged when inserting electrode assembly 200 into case main body 110.

### (Mechanism That Presses Electrode Assembly)

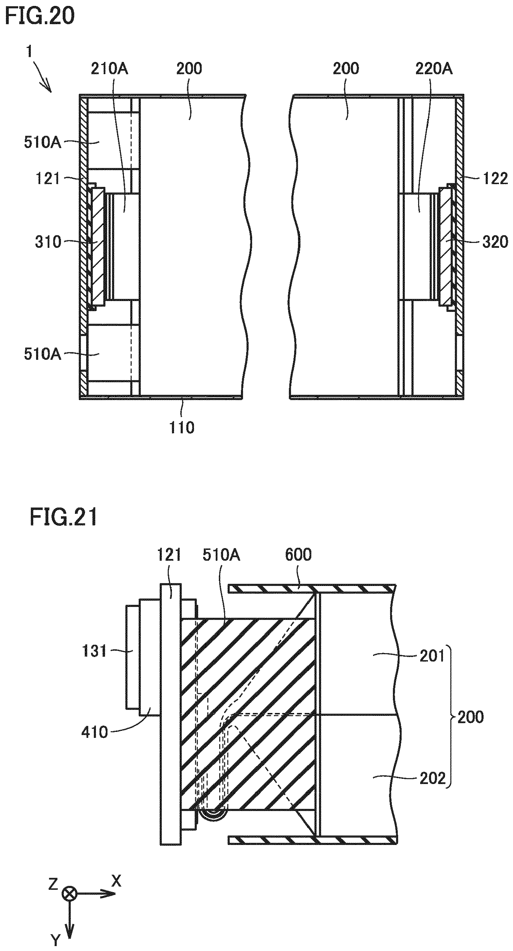

Fig. 20 is a diagram showing an exemplary mechanism that presses electrode assembly 200 with sealing plate 121 and a spacer 510A being interposed therebetween. Fig. 21 is a diagram showing a state in which the mechanism shown in Fig. 20 is viewed in the Z axis direction. Spacer 510A is a modification of spacer 510 described above.

As shown in Figs. 20 and 21, spacer 510A is disposed at a position to avoid negative electrode tab group 210A and negative electrode current collector 310 (position separated from negative electrode tab group 210A and negative electrode current collector 310) in the height direction (Z axis direction) of each of sealing plate 121 and electrode assembly 200. More specifically, spacer 510A is disposed at two locations so as to sandwich negative electrode tab group 210A in the Z axis direction. Spacer 510A preferably presses a portion of electrode assembly 200 at which negative electrode tab group 210A is not provided. In particular, spacer 510A preferably presses its portion at which the separator protrudes with respect to the end portion of negative electrode plate 210. Spacer 510A may be provided only on one side of negative electrode tab group 210A in the Z axis direction. Spacer 510A can be fixed to sealing plate 121 and/or electrode assembly 200 by a method such as adhesion, welding, or taping. It should be noted that spacer 510A may be in contact with negative electrode tab group 210A.

It is preferable to provide a through hole, a notch, a slit, or the like in spacer 510A at a position facing injection hole 141. Further, it is preferable to provide a through hole, a notch, a slit, or the like in spacer 510A at a position facing gas-discharge valve 151. Thus, the function of injection hole 141 or gas-discharge valve 151 can be ensured more securely.

In the example of Figs. 20 and 21, electrode assembly 200 is inserted into case main body 110 by pressing electrode assembly 200 with spacer 510A being interposed therebetween. In an initial stage of the step of inserting electrode assembly 200, a portion of electrode assembly 200 may be inserted into case main body 110 with electrode assembly 200 being held, and then electrode assembly 200 may be further inserted by pressing electrode assembly 200 with spacer 510A being interposed therebetween.

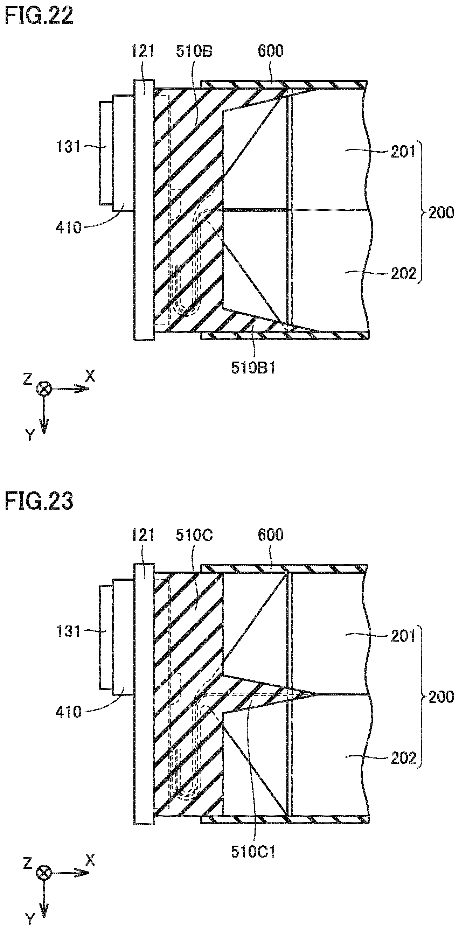

Next, further modifications of spacer 510A will be described with reference to Figs. 22 to 27.

A spacer 510B shown in Fig. 22 has two protrusions 510B1. Each of two protrusions 510B1 has a tapered shape in which the width thereof in the Y axis direction is decreased toward its tip. The tips of two protrusions 510B1 are respectively inserted between electrode assembly 201 and the inner surface of case main body 110 and between electrode assembly 202 and the inner surface of case main body 110. In the step of inserting electrode assembly 200, each of electrode assemblies 201, 202 can be pressed into case main body 110 with protrusion 510B1 being interposed therebetween.

A spacer 510C shown in Fig. 23 has a protrusion 510C1. Protrusion 510C1 has a tapered shape in which the width thereof in the Y axis direction is decreased toward its tip. The tip of protrusion 510C1 is inserted between electrode assemblies 201, 202. In the step of inserting electrode assembly 200, each of electrode assemblies 201, 202 can be pressed into case main body 110 with protrusion 510C1 being interposed therebetween.

The shape of each of protrusions 510B1, 510C1 can be appropriately changed. For example, the tip of each of protrusions 510B1, 510C1 may have a curved shape (shape with a curvature).

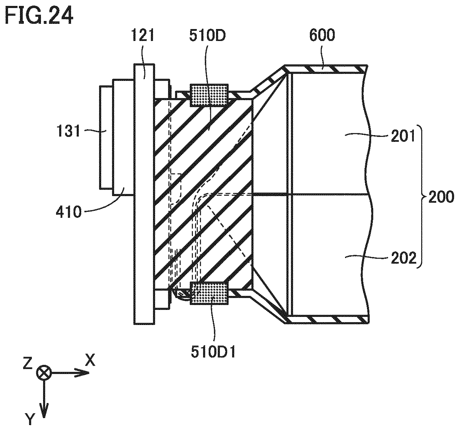

A spacer 510D shown in Fig. 24 is fixed to insulating sheet 600 at a joining portion 510D1. Joining portion 510D1 can be formed by, for example, thermal welding, adhesion, fitting, taping, or the like. In the step of inserting electrode assembly 200, each of electrode assemblies 201, 202 can be pressed into case main body 110 with spacer 510D and insulating sheet 600 being interposed therebetween.

In the example of Fig. 24, the structure is shown in which insulating sheet 600 partially covers spacer 510D; however, there may be employed a structure in which insulating sheet 600 completely covers spacer 510D. Further, instead of or in addition to joining portion 510D1 between spacer 510D and insulating sheet 600, a joining portion between portions of insulating sheet 600 may be provided.

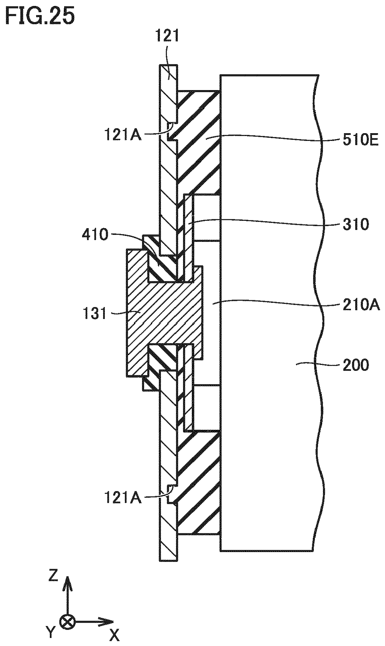

A spacer 510E shown in Fig. 25 also serves as an insulating portion that insulates between negative electrode current collector 310 and sealing plate 121. With such a configuration, electrode assembly 200 can be pressed more stably by spacer 510E in the step of inserting electrode assembly 200. It should be noted that spacer 510E can be fitted in a recess 121A provided in sealing plate 121.

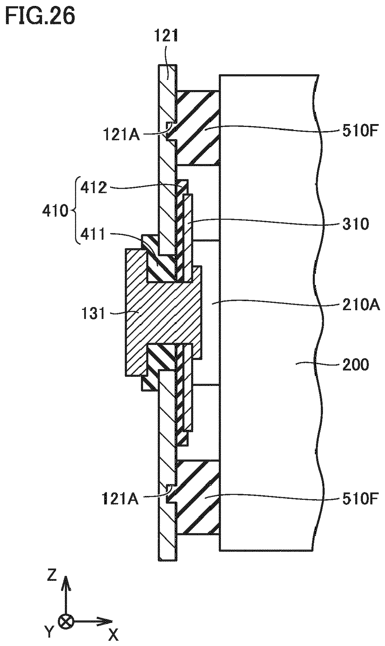

Two spacers 510F (Fig. 26) are separately disposed on both sides beside negative electrode current collector 310. Further, insulating member 410 includes: a first insulating member 411 (gasket) provided between negative electrode terminal 131 and sealing plate 121; and a second insulating member 412 provided between negative electrode current collector 310 and sealing plate 121. Each of spacers 510F is fitted in a recess 121A provided in sealing plate 121.

In each of the structures illustrated in Figs. 25 and 26, each of spacers 510E, 510F can be fixed to sealing plate 121 through the fitting by the protrusion/recess between spacer 510E or 510F and sealing plate 121. Instead of or in addition to the fitting by the protrusion/recess, other fixing means (adhesion, welding, taping, or the like) may be used. Further, latch fixing may be used.

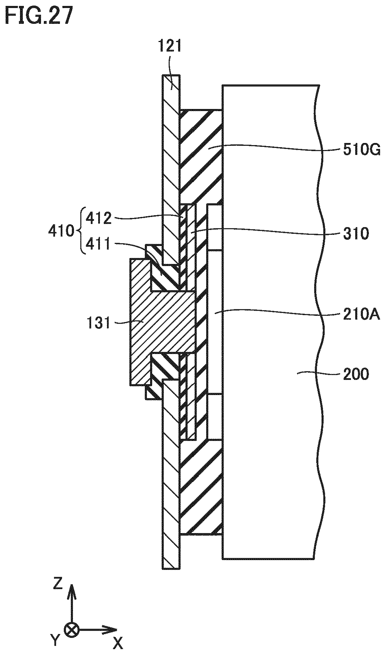

A spacer 510G shown in Fig. 27 is disposed to cross the bent portion of negative electrode tab group 210A in the Z axis direction. In the step of inserting electrode assembly 200, electrode assembly 200 can be pressed into case main body 110 with spacer 510G being interposed therebetween.

Instead of each of the spacers described above, a spacer fixed to electrode assembly 200 may be disposed. The fixation of the spacer to electrode assembly 200 is performed by, for example, taping or the like.

### (Manufacturing Process for Secondary Battery 1)

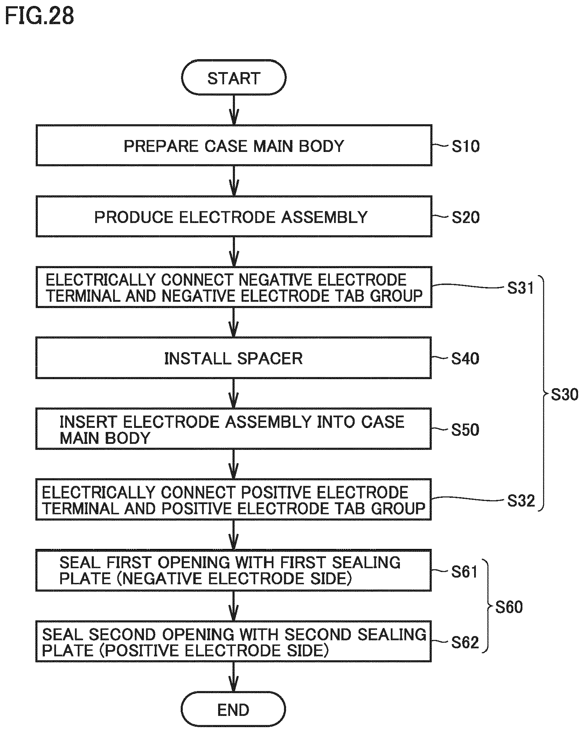

Fig. 28 is a flowchart showing each step of the method of manufacturing secondary battery 1. As shown in Fig. 28, in S10, case main body 110 is prepared. Next, in S20, electrode assembly 200 is produced. In S30, the electrode terminals provided on sealing plates 121, 122 and the electrode tab groups of electrode assembly 200 are electrically connected. On this occasion, first, negative electrode terminal 131 and negative electrode tab group 210A are electrically connected (S31), then spacer 510 is disposed between sealing plate 121 on the negative electrode side and electrode assembly 200 (S40), and electrode assembly 200 is further inserted into case main body 110 (S50). On this occasion, positive electrode tab group 220A protrudes to the outside of case main body 110 with respect to opening 112 of case main body 110. After electrode assembly 200 is inserted into case main body 110, positive electrode terminal 132 and positive electrode tab group 220A are electrically connected to each other (S32).

In the present embodiment, it has been illustratively described that the connecting (S31) of negative electrode terminal 131 and negative electrode tab group 210A, the inserting (S50) of electrode assembly 200, and the connecting (S32) of positive electrode terminal 132 and positive electrode tab group 220A are performed in this order; however, the scope of the present technology is not limited thereto, and the connecting (S32) of positive electrode terminal 132 and positive electrode tab group 220A, the inserting (S50) of electrode assembly 200, and the connecting (S31) of negative electrode terminal 131 and negative electrode tab group 210A may be performed in this order.

After the connecting (S30) of the electrode terminal and the electrode tab group is completed, openings 111, 112 are respectively sealed with sealing plates 121, 122 (S60). Each of the steps of sealing with sealing plates 121, 122 is performed by, for example, laser welding.

The step (S61) of sealing opening 111 with sealing plate 121 on the negative electrode side may be performed after the step (S50) of inserting electrode assembly 200 into case main body 110, and the step (S62) of sealing opening 112 with sealing plate 122 on the positive electrode side may be performed after the step (S32) of electrically connecting positive electrode terminal 132 and positive electrode tab group 220A.

Therefore, for example, the step (S61) of sealing opening 111 with sealing plate 121 may be performed before the step (S32) of electrically connecting positive electrode terminal 132 and positive electrode tab group 220A, and the step (S61) of sealing opening 111 with sealing plate 121 may be performed after the step (S62) of sealing opening 112 with sealing plate 122. Further, at least parts of the steps (S61, S62) of sealing with sealing plates 121, 122 can be performed simultaneously.

### (Summary)

The above-described contents of the method of manufacturing secondary battery 1 according to the present embodiment are summarized as follows.

As shown in Fig. 28, the method of manufacturing secondary battery 1 includes: the step (S10) of preparing case main body 110 provided with opening 111 and opening 112 facing opening 111; the step (S20) of producing electrode assembly 200 including negative electrode plate 210 and positive electrode plate 220, electrode assembly 200 having negative electrode tab group 210A located at one end portion of electrode assembly 200 and including negative electrode tabs 210B connected to negative electrode plate 210, electrode assembly 200 having positive electrode tab group 220A located at the other end portion of electrode assembly 200 and including positive electrode tabs 220B connected to positive electrode plate 220; the step (S31) of electrically connecting negative electrode terminal 131 and negative electrode tab group 210A to each other, negative electrode terminal 131 being provided on sealing plate 121; the step (S50) of inserting electrode assembly 200 into case main body 110 from the end portion side of electrode assembly 200 on the positive electrode tab group 220A side through opening 111 after electrically connecting negative electrode terminal 131 and negative electrode tab group 210A to each other; the step (S32) of electrically connecting positive electrode terminal 132 and positive electrode tab group 220A to each other after inserting electrode assembly 200 into case main body 110, positive electrode terminal 132 being provided on sealing plate 122; the step (S61) of sealing opening 111 with sealing plate 121 after inserting electrode assembly 200 into case main body 110; and the step (S62) of sealing opening 112 with sealing plate 122 after electrically connecting positive electrode terminal 132 and positive electrode tab group 220A to each other.

In the method of manufacturing secondary battery 1 according to an example, electrode assembly 200 before being inserted into case main body 110 may be covered with insulating sheet 600. It should be noted that in the present technology, insulating sheet 600 that covers electrode assembly 200 is not necessarily essential.

The method of manufacturing secondary battery 1 according to an example further includes the step (S40) of disposing spacer 510 between sealing plate 121 and electrode assembly 200. It should be noted that in the present technology, the step (S40) of disposing spacer 510 is not necessarily essential.

By disposing spacer 510, electrode assembly 200 can be inserted into case main body 110 by pressing electrode assembly 200 with spacer 510 being interposed therebetween. Electrode assembly 200 may be pressed with spacer 510 being interposed therebetween by pressing sealing plate 121 in the X axis direction, or electrode assembly 200 may be pressed with spacer 510 being interposed therebetween by moving sealing plate 121 to the electrode assembly 200 side while holding sealing plate 121 (sandwiching sealing plate 121 in the Y axis direction).

In the method of manufacturing secondary battery 1, after inserting a portion of electrode assembly 200 into case main body 110 with electrode assembly 200 being held, electrode assembly 200 can be inserted into case main body 110 by pressing electrode assembly 200 using sealing plate 121 with spacer 510 being interposed between electrode assembly 200 and sealing plate 121 until sealing plate 121 is brought into abutment with case main body 110. Thus, at least a whole of a portion of electrode assembly 200 except for positive electrode tab group 220A is disposed in case main body 110.

In secondary battery 1 according to an example, in the step (S50) of inserting electrode assembly 200 into case main body 110, spacer 510 is brought into abutment with a position located at the end portion of electrode assembly 200 on the sealing plate 121 side and separated from negative electrode tab group 210A. It should be noted that spacer 510 preferably directly presses a portion of electrode assembly 200 from which the separator included therein is exposed or indirectly presses the portion with insulating sheet 600 or the like being interposed therebetween. It should be noted that the position at which spacer 510 is brought into abutment with electrode assembly 200 is appropriately changed. Further, spacer 510 may not be necessarily brought into abutment with electrode assembly 200.

Although the spacer disposed on the negative electrode side has been described in the present embodiment, a similar spacer may be disposed on the positive electrode side. Spacers may be disposed on both the negative electrode side and the positive electrode side, or a spacer may be disposed on only one of the negative electrode side and the positive electrode side.

### (Functions and Effects)

According to secondary battery 1 of the present embodiment, by employing the structure in which electrode assembly 200 is inserted into case main body 110 provided with openings 111, 112 facing each other and negative electrode terminal 131 and positive electrode terminal 132 are provided on sealing plates 121, 122 that seal openings 111, 112 respectively, the height of secondary battery 1 can be reduced and ease of mounting of secondary battery 1 on a vehicle can be improved. Further, by inserting electrode assembly 200 into case main body 110 from the positive electrode tab group 220A side of electrode assembly 200 through opening 111 after negative electrode terminal 131 and negative electrode tab group 210A are electrically connected to each other, i.e., by attaching sealing plate 121 to negative electrode tab group 210A before electrode assembly 200 is inserted into case main body 110, negative electrode tab group 210A can be formed to have a relatively short length as compared with a case where sealing plate 121 is attached to negative electrode tab group 210A after electrode assembly 200 is inserted into case main body 110. As a result, a volume occupied by electrode assembly 200 in the space inside case main body 110 can be made large, thereby improving the energy density of secondary battery 1.

Further, in the above-described example, spacer 510 is disposed between sealing plate 121 and electrode assembly 200, and electrode assembly 200 is inserted into case main body 110 by pressing electrode assembly 200 with the spacer being interposed therebetween. Thus, an excessive load can be suppressed from being applied to negative electrode tab group 210A in the step of inserting electrode assembly 200, thereby suppressing damage of negative electrode tab group 210A. Therefore, secondary battery 1 can be manufactured more efficiently and stably.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of manufacturing a secondary battery, the method comprising:
preparing a case main body (110) provided with a first opening (111) and a second opening (112) facing the first opening (111);
producing an electrode assembly (200) including a first electrode (210) and a second electrode (220) having a polarity different from a polarity of the first electrode (210), the electrode assembly (200) having a first electrode tab (210B) located at a first end portion of the electrode assembly (200) and connected to the first electrode (210), the electrode assembly (200) having a second electrode tab (220B) located at a second end portion of the electrode assembly (200) and connected to the second electrode (220), the second end portion being located opposite to the first end portion;
electrically connecting a first electrode terminal (131) and the first electrode tab (210B) to each other, the first electrode terminal (131) being provided on a first sealing plate (121);
inserting the electrode assembly (200) into the case main body (110) from the second end portion side of the electrode assembly (200) through the first opening (111) after electrically connecting the first electrode terminal (131) and the first electrode tab (210B) to each other;
electrically connecting a second electrode terminal (132) and the second electrode tab (220B) to each other after inserting the electrode assembly (200) into the case main body (110), the second electrode terminal (132) being provided on a second sealing plate (122);
sealing the first opening (111) with the first sealing plate (121) after inserting the electrode assembly (200) into the case main body (110); and
sealing the second opening (112) with the second sealing plate (122) after electrically connecting the second electrode terminal (132) and the second electrode tab (220B) to each other.

2. The method of manufacturing the secondary battery according to claim 1, further comprising disposing a spacer (510) between the first sealing plate (121) and the electrode assembly (200), wherein
the electrode assembly (200) is inserted into the case main body (110) by pressing the electrode assembly (200) using the first sealing plate (121) with the spacer (510) being interposed between the electrode assembly (200) and the first sealing plate (121).

3. The method of manufacturing the secondary battery according to claim 2, wherein in the inserting of the electrode assembly (200) into the case main body (110), the spacer (510) is brought into abutment with a position located at the first end portion of the electrode assembly (200) and separated from the first electrode tab (210B).

4. The method of manufacturing the secondary battery according to claim 2 or 3, wherein the disposing of the spacer (510) includes fixing the spacer (510) to the first sealing plate (121).

5. The method of manufacturing the secondary battery according to claim 2 or 3, wherein the disposing of the spacer (510) includes fixing the spacer (510) to the electrode assembly (200).

6. The method of manufacturing the secondary battery according to any one of claims 1 to 5, further comprising covering, with an electrode assembly holder (600) having an insulating property, the electrode assembly (200) before being inserted into the case main body (110).

7. The method of manufacturing the secondary battery according to claim 1, further comprising disposing a spacer (500) between the first sealing plate (121) and the electrode assembly (200), wherein
after inserting a portion of the electrode assembly (200) into the case main body (110) with the electrode assembly (200) being held, the electrode assembly (200) is inserted into the case main body (110) by pressing the electrode assembly (200) using the first sealing plate (121) with the spacer (500) being interposed between the electrode assembly (200) and the first sealing plate (121) until the first sealing plate (121) is brought into abutment with the case main body (110).
